(19) Europäisches Patentamt
European Patent Office
Office européen des brevets

(11) EP 2 466 249 A1

(12) **EUROPEAN PATENT APPLICATION**

(43) Date of publication:
**20.06.2012 Bulletin 2012/25**

(51) Int Cl.:
*G01B 3/00* (2006.01)   *G01B 5/008* (2006.01)
*G05B 19/35* (2006.01)   *G05B 19/401* (2006.01)

(21) Application number: **11193420.4**

(22) Date of filing: **14.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2010 JP 2010279891**

(71) Applicant: **Canon Kabushiki Kaisha**
**Tokyo 146-8501 (JP)**

(72) Inventor: **Nakajima, Ryusuke**
**Tokyo Tokyo 146-8501 (JP)**

(74) Representative: **TBK**
**Bavariaring 4-6**
**80336 München (DE)**

(54) **Shape measuring apparatus and method**

(57)     Provided is a method for measuring the shape of the surface of an object (12) by moving a contact probe (1) along the surface of the object (12). The relationship between the surface of the object (12) and the direction of a moving unit (8, 9, 10) is supposed from the magnitudes of the components of a contact force applied to the probe (1). Thus, the contact force of the probe (1) is controlled using only a moving unit (8, 9, 10) that is determined to be nearly orthogonal to the surface of the object (12) under measurement.

FIG. 2

**Description**

BACKGROUND OF THE INVENTION

Field of the Invention

The present invention relates to a shape measuring method and apparatus having a contact probe that measures the surface shape of an optical element, such as a lens and a mirror, and a mold for manufacturing an optical element with high accuracy of the order of nanometer. More particularly, the present invention relates to a profile measuring apparatus capable of coping also with a vertical rising wall surface and the inner surface of a hole.

Description of the Related Art

A known example of a shape measuring apparatus that measures the coordinates and shape of the surface of an object under measurement having a three dimensional shape, such as a lens and a mirror, is a profile measuring apparatus that uses a stylus called a probe. This apparatus moves the probe along the surface of the object while pushing the surface with a predetermined contact force and measures the coordinates and shape of the object from the moving position.

A known example of such a shape measuring apparatus is a probe control apparatus disclosed in Japanese Patent Laid-Open No. 2009-300200. This apparatus includes a probe that can be inclined in two axial directions, X-axis and Y-axis, an inclination controller that keeps the biaxial inclination at a desired value, and a biaxial position controller capable of moving the probe. The probe has an optical system for optically measuring information of the distal end of the probe. Using the optical system allows measurement of the three-dimensional, X, Y, Z, coordinate position of the probe in a space and the inclination angle of the probe and thus allows measurement of the position of the distal end of the probe in contact with the object, that is, the shape of the object, from the obtained information. This apparatus keeps the inclination of the probe during contact constant with the inclination controller to thereby keep the contact force to the object constant. While performing a contact force control on one axis using the inclination controller, the apparatus moves the probe on the other axes with the position controller, so that profile-scanning can be performed while keeping the contact force constant. Furthermore, by switching between axes for the inclination control and for the position control depending on known position information or conditions of biaxial contact force, the apparatus can perform profile-scanning of the probe to a desired position in the biaxial plane of the apparatus, thus allowing scanning of the circumferential wall surface of a cylindrical object etc.

However, the method disclosed in Japanese Patent Laid-Open No. 2009-300200 changes the probe scanning direction by switching the inclination control and the position control between two orthogonal axes. Therefore, keeping the probe moving speed constant during the switching causes the operation to be discontinuous at the scanning-direction switching point, which makes it impossible to keep the contact force constant, thus decreasing the measurement accuracy at the switching point. On the other hand, keeping the contact force as constant as possible needs to decrease the moving speed by means of the position control, which causes a decrease in throughput.

SUMMARY OF THE INVENTION

The present invention has been made in consideration of the unsolved problems of the related art. The present invention provides a shape measuring apparatus and method capable of stable scanning control of an object that may cause discontinuous points in terms of control, such as circumferential scanning and scanning of a vertical surface.

The present invention in its first aspect provides a method for measuring the shape of an object as specified in claim 1.

According to an aspect of the present invention, the relationship between an object surface and a moving axis is estimated by comparing a contact force applied to the probe and the component of force in the direction of a moving unit that moves the probe. As a result, if it is determined that the object surface and the moving axis are nearly parallel to each other, contact force control of the moving axis parallel to the object surface is invalidated, and contact force control is performed using a moving axis orthogonal to the object surface. On the other hand, for position control a moving axis parallel to the object surface is used to enable the probe to move along the object surface. This prevents contact force control from interfering with position control, thus allowing response of contact force control and position control to be independently increased. In the case where the object surface is nearly orthogonal to the sum of unit vectors in a plurality of moving axes, contact force control can be achieved using moving units in the moving axes. Also in this state, the vectors of contact force and the vectors in probe moving direction are nearly orthogonal, so that there is no problem even if the response of the contact force control and the position control are independently improved. On the other hand, if it is necessary to switch between moving units that play the role of position control, a plurality of moving units can be temporarily used.

This can therefore prevent discontinuity due to the switching. Thus, even for an object that requires contact force control and position control in a plurality of directions for measurement, such as in circumferential scanning of an outer circumferential surface of a cylinder, smooth and high-speed shape measurement can be achieved.

Further features of the present invention will become apparent from the following description of exemplary embodiments with reference to the attached drawings.

BRIEF DESCRIPTION OF THE DRAWINGS

Fig. 1 is a diagram illustrating the configuration of a probe according to a first embodiment of the present invention.

Fig. 2 is a schematic diagram illustrating an example of measurement of the first embodiment.

Fig. 3 is a flowchart for determining a moving axis to be invalidated in the first embodiment.

Figs. 4A and 4B are schematic diagrams illustrating the relationship between a threshold value and the position of the probe in the case where a cylindrical surface is scanned in the first embodiment.

Figs. 5A and 5B are schematic diagrams illustrating the relationship between a threshold value and the position of the probe in the case where a hemispherical surface is scanned in the first embodiment.

Fig. 6 is a diagram showing the relationship between the components of stylus pressure and a threshold in the case where the circumferential wall surface of a cylinder is scanned in the first embodiment.

DESCRIPTION OF THE EMBODIMENTS

Embodiment of the present invention will be described with reference to the drawings.

First Embodiment

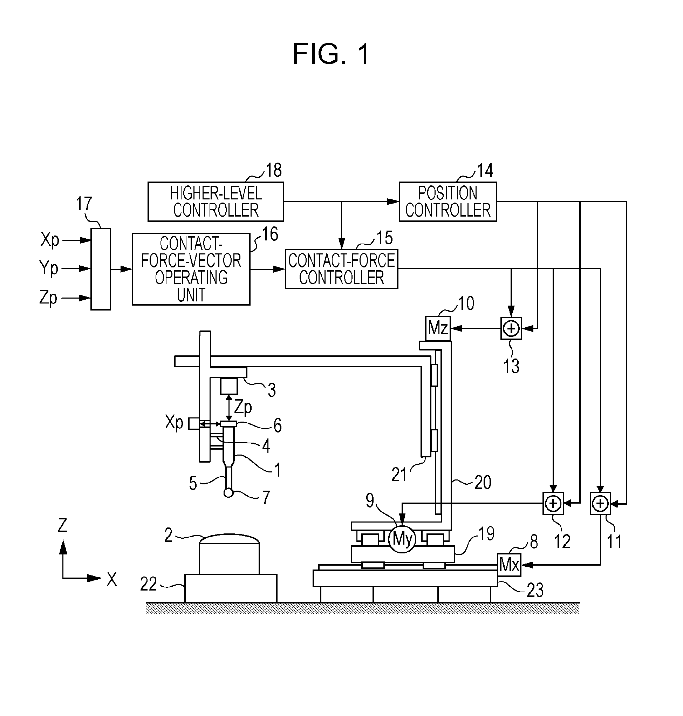

Fig. 1 is a diagram illustrating the features of the present invention, in which the configuration of the first embodiment is shown. In Fig. 1, the surface of an object 2 to be measured is subjected to profile-scanning with a probe 1 to measure the position information of the probe 1 to thereby perform shape measurement. The probe 1 includes a probe shaft 5 having a probe ball 7 at the distal end and a triple mirror 6 at the trailing end. The probe 1 is suspended from a probe holding unit 3 and is elastically supported by a leaf spring 4. The distance from the triple mirror 6 is measured by interferometers Xp and Zp provided on the probe holding unit 3 and an interferometer Yp (not shown) provided in a depthwise direction in the plane of the drawing. The probe holding unit 3 can be moved in a three-dimensional direction in a desired space within the strokes of the individual axes by an X-axis moving unit 8, a Y-axis moving unit 9, and a Z-axis moving unit 10 which are in a mutually orthogonal relationship. The measuring directions of the individual interferometers, Xp, Yp, and Zp are parallel to the moving directions of the X-axis moving unit 8, the Y-axis moving unit 9, and the Z-axis moving unit 10, which moves the probe holding unit 3, respectively.

The distances measured by the interferometers, Xp, Yp, and Zp are input to a probe-position-and orientation calculating unit 17 and are calculated from the known spring rigidity of the leaf spring 4 into X-, Y-, and Z- contact forces. The obtained contact forces are dealt as vectors by a contact-force-vector operating unit 16, and the vectors of the measured contact forces, that is, the magnitudes and directions, are calculated. The amounts of control of the X-axis moving unit 8, the Y-axis moving unit 9, and the Z-axis moving unit 10 are calculated by the contact-force controller 15 so that the obtained resultant force becomes constant at a target value. On the other hand, to operate the probe 1 irrespective of the contact forces, a position controller 14 also calculates the amounts of control of the X-axis moving unit 8, the Y-axis moving unit 9, and the Z-axis moving unit 10 in accordance with an instruction from a higher-level controller 18 and issues an instruction for probe scanning. The information given to the position controller 14 is a path that follows the object, which is given from a design shape or the like. By using the amounts of control from the two controllers 14 and 15, the final moving amounts of the X-axis moving unit 8, the Y-axis moving unit 9, and the Z-axis moving unit 10 are calculated by the X-axis-direction-movement calculating unit 11, the Y-axis-direction-movement calculating unit 12, the Z-axis-direction-movement calculating unit 13, and the moving units 8, 9, and 10 are moved in the individual axial directions. This allows the probe holding unit 3 to be moved so that the probe 1 scans the object 2 while keeping the contact force constant.

Control of the contact force of the probe 1 will be described. Components of force, Fx, Fy, and Fz, in the individual moving axial directions are calculated from the rigidities Kx, Ky, and Kz of the probe 1, which are obtained in advance, by the contact-force-vector operating unit 16 as follows:

$$Fx = Kx*Xp \quad (Exp. \ 1)$$

$$Fy = Ky*Yp \quad (Exp. \ 2)$$

$$Fz = Kz*Zp \quad (Exp. \ 3)$$

where Xp, Yp, and Zp are distances from the triple mirror 6 measured by the interferometer Xp, the interferometer Yp (not shown), and the interferometer Zp, respectively. Accordingly, the magnitude of the resultant force thereof (contact force) is expressed as

$$Fxyz = (Fx^2 + Fy^2 + Fz^2)^{1/2} \quad (Exp. \ 4).$$

In other words, the components of force are calculated by measuring the position to calculate the three-dimensional coordinate position and multiplying the position by the rigidity of the probe 1.

The amounts of control of the X-axis moving unit 8, the Y-axis moving unit 9, and the Z-axis moving unit 10 are calculated by the contact-force controller 15 so that the contact force Fxyz reaches a target value Ft. Here, the contact-force controller 15 calculates target values Ftx, Fty, and Ftz for the individual axial moving units 8, 9, and 10 so that the individual components of force are equalized with the individual target values Ftx, Fty, and Ftz. An example of a method for calculating the amounts of control employs proportional control in which the amount of control of the X-axis is proportional to the difference between Fx and Ftx and another example uses an integrator or various compensators to enhance target trackability.

The method for calculating Ftx, Fty, and Ftz from Ft needs to determine the values Ftx, Fty, and Ftz depending on the difference in performance among the axial moving units 8, 9, and 10. Here, an example in which all of the three axial moving units 8, 9, and 10 have equal performance will be described.

For the x-axis, the following expression holds:

$$Ftx = Ft*Fx'/(Fx'^2 + Fy'^2 + Fz'^2)^{1/2} \quad (Exp. \ 5)$$

where Fx', Fy', and Fz' are the measured components of force in the individual axial directions subjected to optical low-pass filtering to remove disturbance. The same applies to the other axes.

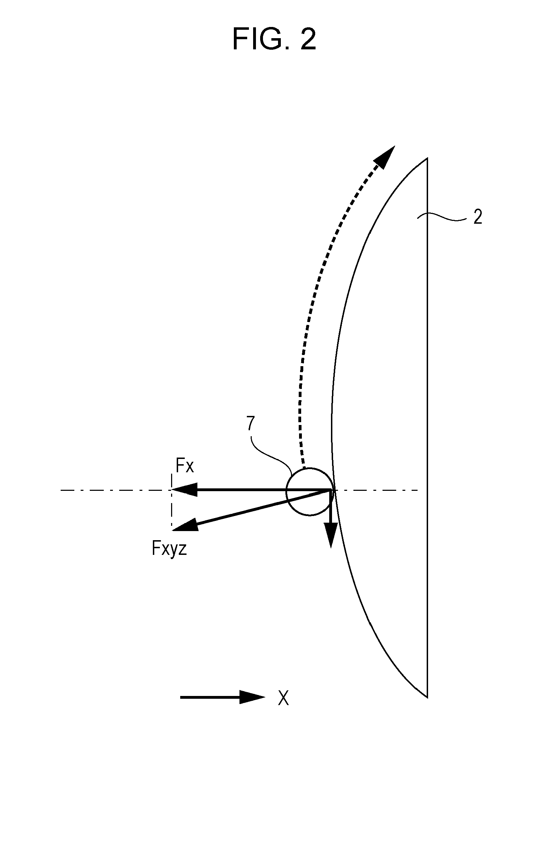

If the amounts of control of positions by the X-axis moving unit 8, the Y-axis moving unit 9, and the Z-axis moving unit 10, which are calculated by the position controller 14, and the amounts of control of contact forces by the contact-force controller 15 are in opposite directions, offset occurs. Even if offset occurs, profile-scanning is possible unless the controllers 14 and 15 are saturated. However, scanning speed cannot be increased to prevent the controllers 14 and 15 from being saturated. Thus, the axis of a moving unit that plays the role of position control and the axis of a moving unit that plays the role of contact force control are separated as much as possible so that offset of the amounts of control along with the interference between the position control and the contact force control does not occur. Fig. 2 schematically illustrates a state in which the contact force and the magnitude of the component of force in the X-axis direction are close to each other and in which the contact force and the moving direction, indicated by the broken line, of the component of force in the direction (either the Y-axis direction or the Z-axis direction) orthogonal to the X-axis direction are substantially opposite.

For example, as shown in Fig. 2, since the contact surface of the object 2 under measurement in contact with the probe 1 and the X-axis are substantially perpendicular to each other, the calculated contact forces Fxyz and Fx, Fy, and Fz are expressed as follows:

$$Fxyz \neq Fx$$

$$Fx \gg Fy$$

$$Fx \gg Fz \quad (Exp. \; 6).$$

Since the amounts of control of contact forces other than Fx are smaller than Fx, there is no problem even if contact force control is performed only by the X-axis moving unit 8. Thus, if the difference between the resultant force Fxyz and the component of force in an axial direction becomes a certain threshold value Fth or less, contact force control in a moving axis parallel to the direction of the component of force is regarded possible. In the case of Fig. 2, this is expressed as:

$$Fxyz - Fx < Fth \quad (Exp. \; 7).$$

In this case, scanning the probe 1 while invalidating contact force control of the components of force other than that in the X-direction, that is, the Y- and Z-directions, by the contact-force controller 15, prevents the influence of the contact force control from being exerted on position control in the Y- and Z-directions.

Here, "invalidating" means stopping force control; specifically, it is achieved by reducing the gain of an integrator installed in the contact-force controller 15 to zero or by extremely reducing the gain so that significant force control cannot be performed. The invalidation may be achieved based on the difference between the contact force or the target value of the contact force and the present force, or alternatively, may be achieved depending on whether a threshold value has been exceeded.

This suppresses the offset of the amount of position control in the Y- or Z-direction and the amount of contact force control, thus allowing high-speed profile-scanning while keeping a constant contact force.

Since Japanese Patent Laid-Open No. 2009-300200, described above, is configured to exclusively switch between force control and position control with specific coordinates, the measurement becomes unstable at the switching point, thus decreasing the measurement accuracy. On the other hand, since the present invention is configured to invalidate force control on a moving axis whose amount of contact force is small on the basis of a threshold value determined from the difference between the contact force and the target value while keeping the position control unchanged, thus allowing smooth scanning.

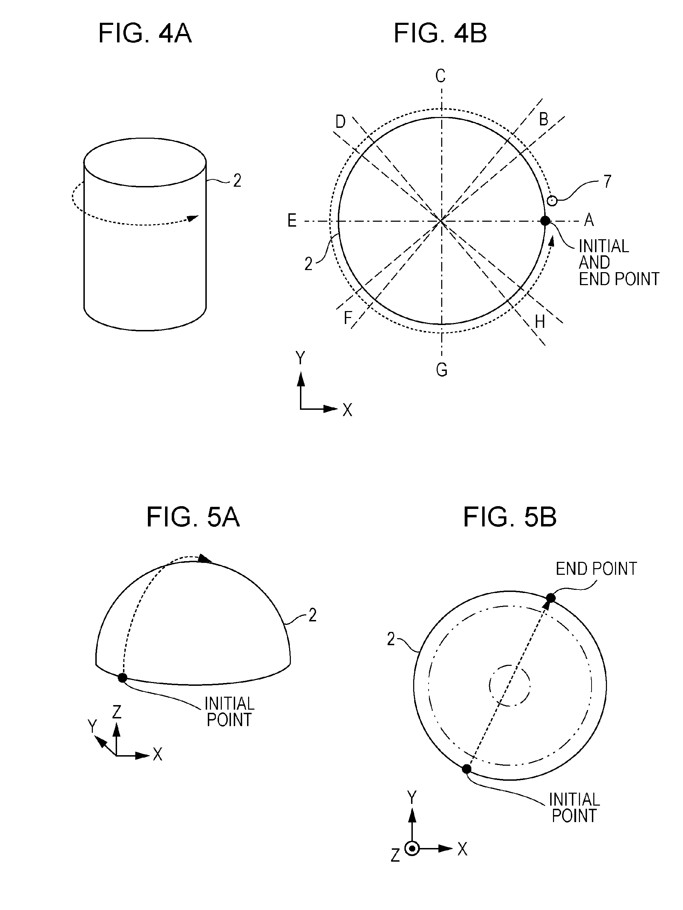

A method for determining the threshold value Fth will be described. An example in which the circumferential surface of the side wall of a cylindrical object, as shown in Fig. 4A, is scanned using the two, X-axis and Y-axis, moving units 8 and 9 that intersect in a plane will be described. In this example, contact force control changes from single-axis control through biaxial control to single-axis control. Thus, it is necessary to determine the threshold value Fth to enable simultaneous control of position and contact force on the X-axis and the Y-axis. Specifically, if the ratio between the components of force in the X- and Y-axis directions is equal (for example, a point at 45° counterclockwise from the initial point), the ratio of the individual components of force to the resultant force Fxy is $(1/2)^{1/2}$. Specifically, the equal sign between the both sides in the following expression,

$$Fth \leq Fxy*(1 - (1/2)^{1/2}) \quad (Exp. \; 8),$$

means that single-axis controls are switched without a section where contact force is controlled biaxially. The inequality sign means that there is a section where the contact force is controlled biaxially.

The value Fxy in (Exp. 8) may be the target value Ft. If Fth = 0, single-axis control is performed only when the resultant force Fxy and the component of force match completely, and otherwise, biaxial control is performed. Accordingly, a condition of the threshold value Fth may be

$$0 < Fth < Fxy*(1-(1/2)^{1/2}) \quad (Exp. \; 9).$$

Also in the case where three axes, X-, Y-, and Z-axes, are used, the following condition

$$0 < Fth < Fxyz*(1-(1/3)^{1/2}) \quad (Exp. 10)$$

holds under similar consideration.

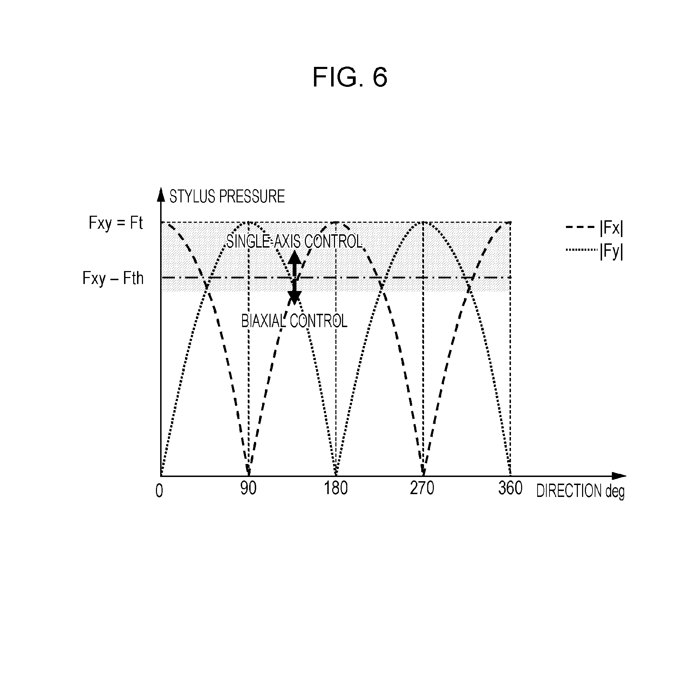

Fig. 6 illustrates the relationship among the threshold value Fth, the resultant force Fxy, and the components of force, Fx and Fy. This shows the relationship between the magnitudes of the components of force in the X- and Y-directions and the threshold value Fth to be set when the X-axis + direction is assumed to be a direction of 0°, and the Y-axis + direction is assumed to be a direction of 90°. This shows changes in the magnitudes of components of force in the X- and Y-directions when the probe 1 scans 360° counterclockwise around the circumference of the cylinder in Figs. 4A and 4B from point A as the initial point. In Fig. 6, the area between the one-dot chain line and the dotted line is the area where Fth is to be set, expressed by (Exp. 9), in which Fth = 0 indicates the upper limit, and Fth = Fxy*$(1-(1/2)^{1/2})$ indicates the lower limit. In Fig. 6, the resultant force Fxy is controlled at Ft, which is constant in all directions. On the other hand, the components of force in the X- and Y-directions change with a change in the probe contact direction, and the component of force of an axis coincident with the normal direction of the object surface becomes maximized. At that time, the path that follows the object surface is orthogonal to the direction of the maximized component of force; therefore, the contact force may be controlled only by a moving unit that is parallel to the component of force. For the point where Fx = Fy holds in Fig. 6, the contributions of the components of the resultant force are equal; therefore, the contact force has to be controlled using both the moving units 8 and 9 in the X- and Y-directions. Actually, if higher-speed measurement is regarded as of importance, Fth may be set large within the range of (Exp. 9) because the larger single-axis control section is advantageous because less offset of the amounts of control is occurs. For example, Fth is set at Fth = 0.9*Fxy*$(1-(1/2)^{1/2})$. Furthermore, by changing the value of Fth before and after switching of the control occurs, that is, by using Fth as a so-called hysteresis trigger, continuous switching may be prevented.

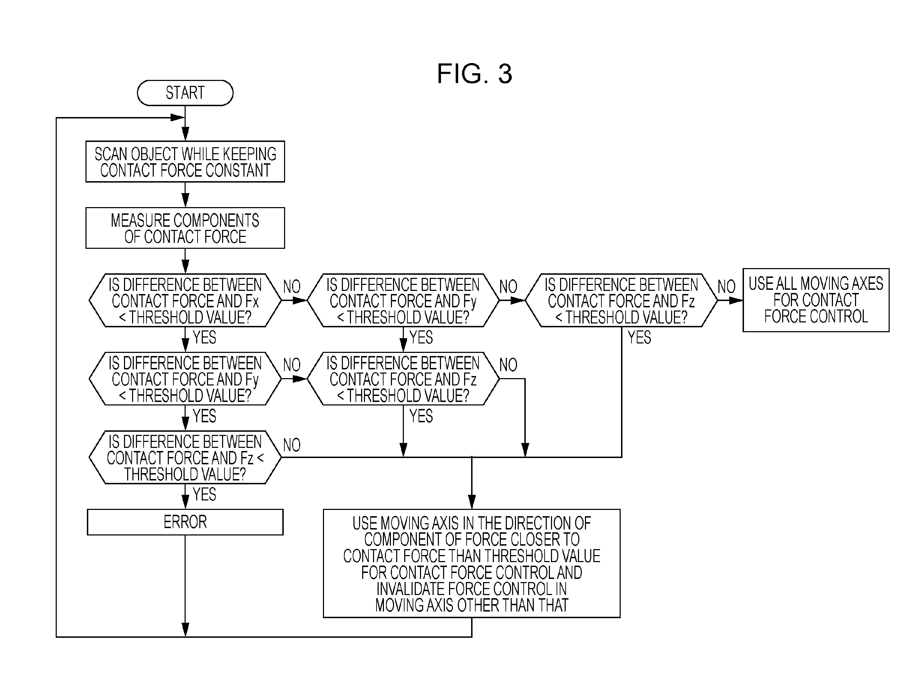

Fig. 3 shows a flowchart for determining the axis of a moving unit that plays the roll of contact force control in probe profile-scanning, that is, a moving axis. In Fig. 3, three-axis configuration (X, Y, and Z) is used; however, two-axis configuration (X and Y) may be considered in a like manner only by removing the component of the Z-direction. Here, the components of force, Fx, Fy, and Fz, in the directions of moving axes X, Y, and Z, which constitute contact force, are measured while performing control for keeping the magnitude of the contact force, Fxyz, constant. For the individual components of force, the difference from the contact force, corresponding to (Exp. 7), is calculated, and a moving axis in a direction in which the component of force is smaller than the threshold value Fth is used for controlling the contact force, and force control of the other moving axes is invalidated. If there is no component whose difference from the contact force is smaller than Fth, all the moving axes are used for contact force control. Since Fth is set within the range of (Exp. 9) or (Exp. 10), all of the components of force in moving axis directions used do not come closer to the resultant force than Fth at the same time. Accordingly, if such a state occurs, the probe 1 may be out of contact or some of units for calculating the contact force, such as an interferometer, may have a problem. Therefore, a signal indicating a fault is generated, and the process of saving the probe 1 to a safe location is performed.

The operation of the shape measuring apparatus in the case of measuring the shape of the side surface of the cylindrical object 2, as shown in Fig. 4A, according to Fig. 3, will be described using Fig. 4B. The shape of the object 2 is measured such that the object 2 is placed on a work gantry 22, and the probe 1 is moved so that the probe ball 7 profile-scans the surface of the object 2. A case where counterclockwise circumferential scanning is started from point A and ends at point A will be described.

Here, the probe ball 7 is brought into contact with the initial and end point A in Fig. 4B, is moved counterclockwise around the circumferential surface of the object 2, and is separated therefrom when coming back to the initial and end point A. First, the probe ball 7 is moved into contact with the initial and end point A on the object 2 using the X-axis moving unit 8, the Y-axis moving unit 9, and the Z-axis moving unit 10. In this case, instructions to the individual axial moving units 8, 9, and 10 are given using the position controller 14, and a path along which the object 2 and the probe ball 7, the probe shaft 5, or the like do not unintentionally come into contact is given from the higher-level controller 18. The position of the initial and end point A may be given either visually or in coordinates obtained through advance rough measurement. A determination whether the probe ball 7 and the object 2 are in contact is made using the measurements of the interferometers Xp, Yp, and Zp.

After the contact probe ball 7 is brought into contact with the initial and end point A, contact force control is immediately performed by the contact-force controller 15. This is performed by moving the probe 1 using the axial moving units 8 and 9 so that the contact force Fxy is fixed at the target value Ft. In this case, moving units that play the role of contact force control are selected according to Fig. 3. If the probe ball 7 is present in the section of A, as in the present stage, the object surface and the X-axis are regarded as being in a substantially orthogonal relationship, and

$$Fxy - Fx < Fth \quad (Exp. \ 11)$$

and

$$Fxy - Fy > Fth \quad (Exp. \ 12)$$

hold, and contact force control is performed only by the X-axis moving unit 8, and the contact force control of Y-axis, which is an axis crossing the X-axis, is invalidated.

Next, by issuing an instruction to move counterclockwise along the circumference of the object 2, as shown in Fig. 4B, is given from the position controller 14, a position control instruction to move around the circumference is given to the X-axis-direction-movement calculating unit 11 and the Y-axis-direction-movement calculating unit 12. The path along the object 2 for use in this position control instruction is generally given from a design shape; instead, the path may be generated through rough measurement or the measurement of another measuring instrument. The X-axis-direction-movement calculating unit 11 and the Y-axis-direction-movement calculating unit 12 add the instruction from the contact-force controller 15 and the position control instruction to move the X-axis moving unit 8 and the Y-axis moving unit 9. This allows the probe ball 7 to move along the circumferential path of the object 2 while controlling the contact force Fxy so as to come close to the target value Ft. When the probe ball 7 reaches a section B in this manner, selection of moving units according to the determination described in Fig. 3 is performed. Since

$$Fxy - Fx > Fth$$

and

$$Fxy - Fy > Fth \quad (Exp. \ 13)$$

hold, there is no axis on which a strong component of force that is close to the contact force is generated, and thus, the X-axis moving unit 8 and the Y-axis moving unit 9 perform contact force control at the same time. Likewise, when the probe ball 7 moves circumferentially to reach a section C,

$$Fxy - Fy < Fth$$

and

$$Fxy - Fx > Fth \quad (Exp. \ 14)$$

holds. Since the component of force in the Y-axis direction comes close to the contact force, and the component of force in the X-axis direction becomes extremely small, contact force control is performed only by the Y-axis moving unit 9. The probe ball 7 can move around the outer circumference of the object 2 for sections D, E, F, G, and H and reaches the initial and end point A again. The foregoing circumferential movement is the same as in the inner surface of a hole. Even for a vertically rising inner wall surface, seamless high-speed profile-scanning can be performed.

When the probe ball 7 reaches the initial and end point A again, and the profiling operation is to be stopped, first, the contact force control is stopped. In this example, since the contact force control is performed only by the X-axis moving unit 8, an instruction value from the contact-force controller 15 is fixed at a value at the stop of the control, so that the position of the probe 1 is fixed. When the contact force control is stopped, a position control instruction is given from the higher-level controller 18 to save the probe 1 so that the probe ball 7, the probe shaft 5, or the like does not unintentionally come into contact with the object 2 etc. Thus, circumferential profile-scanning in the X-Y plane of the surface of the cylindrical object 2 can be performed. The circumferential shape of the cylindrical object 2 that the probe ball 7 follows can be obtained by calculating the contact position of the probe ball 7 while the resultant force Fxy of the contact force is controlled at the target value Ft.

Next, as shown in Fig. 5, a case where the object 2 is semispherical, the surface of which is scanned by moving the probe 1 in three dimensions, will be described. In other words, a case where Fth is determined as Fth = 0.9*Fxyz* $(1-(1/3)^{1/2})$ using (Exp. 10), and the probe ball 7 is moved along the path from the initial point to the end point, as indicated by the dotted arrow in Fig. 5, will be described.

Here, the process of the apparatus of the present invention from bringing the probe ball 7 into contact with the initial point in Fig. 5B, moving along the surface of the object 2, passing across the top, and arriving at the end point, where the probe ball 7 is separated, will be described. First, the probe ball 7 is moved into contact with the initial point on the object 2 using the X-axis moving unit 8, the Y-axis moving unit 9, and the Z-axis moving unit 10. In this case, instructions to the individual axial moving units are given using the position controller 14, and a path along which the object 2 and the probe ball 7, the probe shaft 5, or the like do not unintentionally come into contact is given from the higher-level controller 18. The position of the initial point may be given either visually or in coordinates obtained through advance rough measurement or from a design shape. A determination whether the probe ball 7 and the object 2 are in contact is made using the measurements of the interferometers Xp, Yp, and Zp.

After the contact probe ball 7 is brought into contact with the initial point, contact force control is immediately performed by the contact-force controller 15. This is performed by moving the probe 1 using the axial moving units 8, 9, and 10 so that the resultant force of the contact force, Fxyz, is fixed at the target value Ft. In this case, moving units that play the role of contact force control are selected according to Fig. 3. When the probe ball 7 is located at the initial point at the foot of the hemisphere in Fig. 5B, most of the contact force work in the horizontal direction, and Fx and Fy are substantially equal, and thus the following relations hold:

$$Fxyz - Fx < Fth \quad (Exp. 15)$$

and

$$Fxyz - Fy < Fth \quad (Exp. 16)$$

and,

$$Fxyz - Fz > Fth \quad (Exp. 17).$$

In this case, the X-axis moving unit 8 and the Y-axis moving unit 9 perform contact force control at the same time, and the Z-axis moving unit 10 does not perform contact force control and is invalidated.

Next, by issuing an instruction to move around the hemispherical object 2, as indicated by the dotted arrow in Fig. 5B, from the position controller 14, a position control instruction to move around the hemisphere is given to the X-axis-direction-movement calculating unit 11, the Y-axis-direction-movement calculating unit 12, and the Z-axis-direction-movement calculating unit 13. The spherical path along the object 2 for use in this position control instruction is generally given from a design shape; instead, the path may be generated through rough measurement or the measurement of another measuring instrument. The X-axis-direction-movement calculating unit 11, the Y-axis-direction-movement calculating unit 12, and the Z-axis-direction-movement calculating unit 13 add the instruction from the contact-force controller 15 and the position control instruction from the position controller 14 to move the X-axis moving unit 8, the Y-axis moving unit 9, and the Z-axis moving unit 10. This allows the probe ball 7 to move along the circumferential path of the object 2 from the initial point to the end point while keeping the resultant force Fxyz of the contact force constant at the target value Ft.

Next, when the probe ball 7 moves forward on the dotted arrow to locate inside the two-dot chain line circle and outside the one-dot chain line circle, the components of force of the contact force are distributed substantially equally in the X-, Y-, and Z-directions, and there is no component of force close to the contact force, and thus the following expressions hold:

$$Fxyz - Fx > Fth \quad (Exp. \ 18)$$

and,

$$Fxyz - Fy > Fth \quad (Exp. \ 19)$$

and,

$$Fxyz - Fz > Fth \quad (Exp. \ 20).$$

In this case, all of the X-axis moving unit 8, the Y-axis moving unit 9, and the Z-axis moving unit 10 perform contact force control and position control in accordance with Fig. 3.

The probe 1 further moves forward into a position inside the one-dot chain line circle, that is, the probe ball 7 arrives at the vicinity of the top of the hemisphere, most of the contact force is made up of Fz. In other words,

$$Fxyz - Fx > Fth \quad (Exp. \ 21)$$

and,

$$Fxyz - Fy > Fth \quad (Exp. \ 22)$$

and,

$$Fxyz - Fz < Fth \quad (Exp. \ 23)$$

hold. Accordingly, in this case, only the Z-axis moving unit 10 performs contact force control, and the X-axis moving unit 8 and the Y-axis moving unit 9 do not perform contact force control. Thereafter, the probe ball 7 passes the region inside the two-dot chain line circle and outside the one-dot chain line circle and the region outside the two-dot chain line and arrives at the end point.

When the probe ball 7 reaches the end point, and the profiling operation is to be stopped, first, the contact force control is stopped. In this example, since the contact force control is performed by the X-axis moving unit 8 and the Y-axis moving unit 9, an instruction value from the contact-force controller 15 to the moving units 8 and 9 is fixed at a value at the stop of the control, so that the position of the probe 1 is fixed. When the contact force control is stopped, a position control instruction is given from the higher-level controller 18 to save the probe 1 so that the probe ball 7, the probe shaft 5, or the like does not unintentionally come into contact with the object 2 etc. This allows scanning without exerting an influence of contact force control on position control even if the probe 1 is three-dimensionally scanned using three axes, XY2. This allows seamless high-speed profile-scanning while keeping contact force constant. Furthermore, the circumferential shape of the hemispherical object 2 that the probe ball 7 follows can be obtained by calculating the contact position of the probe ball 7 while the resultant force Fxyz of the contact force is controlled at the target value Ft.

The instruction given to the position controller 14 may be given from, for example, the design shape of the object 2 by the higher-level controller 18. In other words, a scanning path reflecting a desired measurement range and data density based on the design shape of the object 2 may be given to the position controller 14 as the instruction. Even if a detailed design shape of the object 2 is not known, the scanning path may be determined after a representative shape that is close to the design shape of the order of, for example, submillimeter is obtained from a schematic design shape or with another simple measuring instrument.

If the difference between the components of force of a plurality of or all of the moving units 8, 9, and 10 and the resultant force or the target value Ft is below the threshold value Fth, contact force control is performed by a moving unit in a corresponding direction. Specifically, the amount of control is output from the contact-force controller 15 to the corresponding moving unit so that the magnitude of a vector expressed by the sum of the component vectors of force in the corresponding direction agrees with the target value Ft. For example, in the case where the X-axis and Y-axis moving units 8 and 9 that intersect in a plane are concerned, the amount of control may be output by calculating Ftx and Fty so as to satisfy

$$(Fx2 + Fy2)^{1/2} = Ft \quad (Exp. 24).$$

If the difference between the components of force of all of the moving units 8, 9, and 10 and the resultant force or the target value Ft exceeds the threshold value Fth, it can be supposed that the probe 1 is not in contact in any directions, in which no normal profiling measurement is performed. Accordingly, in this case, the higher-level controller 18 is notified of the fault, and position control is performed irrespective of the contact force, for example, the probe 1 is saved, in accordance with an instruction from the higher-level controller 18.

Although this embodiment assumes a laser scale as a probe-position-and-orientation measuring unit, such as the interferometer Xp, other measuring units, such as an electricalcapacitance displacement meter and an eddy-current displacement meter, may be used.

Other Embodiments

In the foregoing embodiment, a threshold value is determined for the difference between contact force and the components of force. This method allows moving units to be invalidated depending on a change in contact force also when the contact force changes due to disturbance, such as the vibration of the apparatus, thus improving robustness.

The setting of the threshold value may be changed as follows. After a specific threshold value Fth is determined, the determination on invalidation may be made depending on whether the components of force, Fx, Fy, and Fz, have exceeded the threshold value Ft. In this case, there is no need to calculate the difference values, which is advantageous in efficient system design, because calculation loads of the calculating units including the higher-level controller 18 due to control can be reduced, and calculation resources can be used for processes that require large calculation loads, such as process of obtained positional data.

The present invention has the above configuration and operations and allows shape measurement of an object having a vertically rising wall surface or inner hole surface, thus providing great advantages in industry and science and technology.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

Provided is a method for measuring the shape of the surface of an object (12) by moving a contact probe (1) along the surface of the object (12). The relationship between the surface of the object (12) and the direction of a moving unit (8, 9, 10) is supposed from the magnitudes of the components of a contact force applied to the probe (1). Thus, the contact force of the probe (1) is controlled using only a moving unit (8, 9, 10) that is determined to be nearly orthogonal to the surface of the object (12) under measurement.

**Claims**

1.    A method for measuring the shape of an object (12) by scanning the surface of the object (12) with a probe (1) that is elastically supported by probe holding means (3) that can move in three-dimensional directions while keeping the probe (1) in contact with the object (12) and by measuring the position of the probe (1), the method comprising the steps of:

   calculating a contact force that the probe (1) receives from the object (12) from the measured position or orientation of the probe (1) and the three-dimensional components of the contact force; and

   scanning the probe (1) while controlling the position of the probe (1) by performing control for bringing the contact force close to a target value using a moving axis of the probe holding means (3) in the direction of a component of force whose difference from the contact force or the target value of the contact force is smaller than a predetermined threshold value and by invalidating control of a contact force using a moving axis of the probe holding means (3) in the direction of at least one other component.

2. The method according to Claim 1, wherein for the components of the contact force, if differences from the contact force or the target value of the contact force are equal to or larger than the threshold value, the sum of the components of force is brought close to the target value of the contact force with the moving axes of the probe holding means (3).

3. The method according to Claim 2, wherein for all of the components, if differences from the contact force or the target value of the contact force are equal to or larger than the threshold value, a signal indicating a fault is issued.

4. A method for measuring the shape of an object (12) by scanning the surface of the object (12) with a probe (1) that is elastically supported by probe holding means (3) that can move in three-dimensional directions while keeping the probe (1) in contact with the object (12) and by measuring the position of the probe (1), the method comprising the steps of:

calculating a contact force that the probe (1) receives from the object (12) from the position or orientation of the probe (1) and the components of the contact force; and
scanning the probe (1) while controlling the position of the probe (1), if any of the components is larger than a predetermined threshold, by performing control for bringing the contact force close to a target value using a moving axis of the probe holding means (3) in the direction of the component of force and by invalidating control of a contact force using a moving axis in the direction of at least one other component.

5. A shape measuring apparatus arranged to measure the shape of an object (12) by scanning the surface of the object (12) with a probe (1) while keeping the probe (1) in contact with the object (12) and by measuring the position of the probe (1), the apparatus comprising:

probe holding means that can move in three-dimensional directions;
a probe (1) that is elastically supported by the probe holding means (3);
measuring means (17) arranged to measure the position and orientation of the probe (1); and
calculating means (16) arranged to calculate a contact force that the probe (1) receives from the object (12) from the measured position or orientation of the probe (1) and the components of force of the contact force, wherein if the difference of any of the components from the contact force or the target value of the contact force is smaller than a predetermined threshold value, probe-scanning is performed while controlling the position of the probe (1) by performing control for bringing the contact force close to a target value using a moving axis of the probe holding means (3) in the direction of the component of force and by invalidating control of a contact force using a moving axis in the direction of at least one other component.

6. A shape measuring apparatus arranged to measure the shape of an object (12) by scanning the surface of the object (12) with a probe (1) while keeping the probe (1) in contact with the object (12) and by measuring the position of the probe (1), the apparatus comprising:

probe holding means that can move in three-dimensional directions;
a probe (1) that is elastically supported by the probe holding means (3);
measuring means (17) arranged to measure the position and orientation of the probe (1); and
calculating means (16) arranged to calculate a contact force that the probe (1) receives from the object (12) from the measured position or orientation of the probe (1) and the components of force of the contact force, wherein if any of the components is larger than a predetermined threshold, probe-scanning is performed while controlling the position of the probe (1) by performing control for bringing the contact force close to a target value using a moving axis of the probe holding means (3) in the direction of the component of force and by invalidating control of a contact force using a moving axis in the direction of at least one other component.

# FIG. 1

# FIG. 2

# FIG. 3

```
                        ┌──────────┐
                        │  START   │
                        └────┬─────┘
                             │
          ┌──────────────────▼──────────────────┐
          │  SCAN OBJECT WHILE KEEPING           │
          │  CONTACT FORCE CONSTANT              │
          └──────────────────┬──────────────────┘
                             │
          ┌──────────────────▼──────────────────┐
          │  MEASURE COMPONENTS                  │
          │  OF CONTACT FORCE                    │
          └──────────────────┬──────────────────┘
                             │
```

IS DIFFERENCE BETWEEN CONTACT FORCE AND Fx < THRESHOLD VALUE?  — NO →  IS DIFFERENCE BETWEEN CONTACT FORCE AND Fy < THRESHOLD VALUE?  — NO →  IS DIFFERENCE BETWEEN CONTACT FORCE AND Fz < THRESHOLD VALUE?  — NO →  USE ALL MOVING AXES FOR CONTACT FORCE CONTROL

↓ YES (from Fx) ... ↓ YES (from Fy) ... ↓ YES (from Fz)

IS DIFFERENCE BETWEEN CONTACT FORCE AND Fy < THRESHOLD VALUE?  — NO →  IS DIFFERENCE BETWEEN CONTACT FORCE AND Fz < THRESHOLD VALUE?

↓ YES ... ↓ YES

IS DIFFERENCE BETWEEN CONTACT FORCE AND Fz < THRESHOLD VALUE?  — NO →

↓ YES

ERROR

USE MOVING AXIS IN THE DIRECTION OF COMPONENT OF FORCE CLOSER TO CONTACT FORCE THAN THRESHOLD VALUE FOR CONTACT FORCE CONTROL AND INVALIDATE FORCE CONTROL IN MOVING AXIS OTHER THAN THAT

# FIG. 4A

# FIG. 4B

# FIG. 5A

# FIG. 5B

# FIG. 6

Europäisches
Patentamt

European
Patent Office

Office européen
des brevets

# EUROPEAN SEARCH REPORT

Application Number

EP 11 19 3420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 737 244 A (RUCK OTTO [DE]) 7 April 1998 (1998-04-07) * the whole document * ----- | 1-6 | INV. G01B3/00 G01B5/008 G05B19/35 G05B19/401 |
| X | GB 2 049 995 A (LEITZ ERNST GMBH) 31 December 1980 (1980-12-31) * the whole document * ----- | 1,3-6 | |
| X,D | JP 2009 300200 A (PANASONIC CORP) 24 December 2009 (2009-12-24) * the whole document * ----- | 1,3-6 | |

| TECHNICAL FIELDS SEARCHED (IPC) |
|---|
| G01B G05B |

The present search report has been drawn up for all claims

| Place of search | Date of completion of the search | Examiner |
|---|---|---|
| Munich | 13 April 2012 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 19 3420

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2012

| Patent document cited in search report | | Publication date | Patent family member(s) | | Publication date |
|---|---|---|---|---|---|
| US 5737244 | A | 07-04-1998 | DE 19529574 A1 | | 13-02-1997 |
| | | | EP 0762247 A1 | | 12-03-1997 |
| | | | US 5737244 A | | 07-04-1998 |
| GB 2049995 | A | 31-12-1980 | CH 646513 A5 | | 30-11-1984 |
| | | | DE 2921166 A1 | | 27-11-1980 |
| | | | FR 2457476 A1 | | 19-12-1980 |
| | | | GB 2049995 A | | 31-12-1980 |
| | | | IT 1130461 B | | 11-06-1986 |
| | | | JP 55158507 A | | 10-12-1980 |
| | | | SE 8003886 A | | 26-11-1980 |
| | | | US 4283669 A | | 11-08-1981 |
| JP 2009300200 | A | 24-12-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009300200 A